# EUROPEAN PATENT APPLICATION

(11) **EP 4 192 092 A1**
(43) Date of publication of application: **07.06.2023**
(21) Application number: 21848767.6
(22) Date of filing: 02.08.2021
(51) Int. Cl.: H04W 28/02

(54) **CONGESTION PROCESSING METHOD AND APPARATUS, AND DEVICE AND STORAGE MEDIUM**

(30) Priority: 31.07.2020 CN 202010761386
(71) Applicant: ZTE Corporation, Shenzhen, Guangdong 518057 (CN)
(72) Inventor: WANG, Liping, Shenzhen, Guangdong 518057 (CN); CHEN, Lin, Shenzhen, Guangdong 518057 (CN)
(74) Representative: Gevers Patents
(86) International application number: PCT/CN2021/109968
(87) International publication number: WO 2022/022734

(57) **Abstract**

Disclosed are a congestion processing method and apparatus, and a device and a storage medium. The congestion processing method is applied to a first node, and comprises: receiving congestion information, wherein the congestion information is used for a first node to perform congestion processing; and performing congestion processing on the basis of the congestion information.

## Description

### TECHNICAL FIELD

The present disclosure relates to the field of communication technologies, for example, to congestion processing methods, apparatuses, a device and a storage medium.

### BACKGROUND

Inter-donor migration of an integrated access and backhaul (IAB) node and multi-path transmission enhancement of the IAB node can be supported in Release 17. A complex topology makes selectable paths for data transmission more abundant, but is more prone to data congestion.

### SUMMARY

The present disclosure provides congestion processing methods, apparatuses, a device and a storage medium, so as to solve the problem of data transmission after path congestion.

An embodiment of the present disclosure provides a congestion processing method. The method is applied to a first node, and includes:
receiving congestion information, the congestion information being used for congestion processing of the first node; and performing the congestion processing based on the congestion information.

An embodiment of the present disclosure further provides a congestion processing method. The method is applied to a second node, and includes:
determining congestion information, the congestion information including downlink congestion information or uplink congestion information; and sending the congestion information to a first node through an F1 application protocol (FLAP) interface.

An embodiment of the present disclosure further provides a congestion processing method. The method is applied to a third node, and includes:
determining congestion information, the congestion information including downlink congestion data radio bearer (DRB) information; and sending the congestion information to a first node through an E1 application protocol (E1AP) interface.

An embodiment of the present disclosure further provides a congestion processing apparatus. The apparatus is configured at a first node, and includes:
a receiving module configured to receive congestion information, the congestion information being used for congestion processing of the first node; and a processing module configured to perform congestion processing based on the congestion information.

An embodiment of the present disclosure further provides a congestion processing apparatus. The apparatus is configured at a second node, and includes:
a first determining module configured to determine congestion information, the congestion information including downlink congestion information or uplink congestion information; and a first sending module configured to send the congestion information to a first node through an F1AP interface.

An embodiment of the present disclosure further provides a congestion processing apparatus. The apparatus is configured at a third node, and includes:
a second determining module configured to determine congestion information, the congestion information including downlink congestion DRB information; and a second sending module configured to send the congestion information to a first node through an E1AP interface.

An embodiment of the present disclosure further provides a device. The device includes:
one or more processors; and a memory configured to store one or more programs. The one or more programs, when executed by the one or more processors, cause the one or more processors to implement the congestion processing method as provided in the embodiments of the present disclosure.

An embodiment of the present disclosure further provides a storage medium. The storage medium has stored a computer program, and the computer program, when executed by a processor, implements the congestion processing method as provided in the embodiments of the present disclosure.

### BRIEF DESCRIPTION OF THE DRAWINGS

FIG. 1 is a flow diagram of a congestion processing method provided in an embodiment of the present disclosure;
FIG. 2 is a flow diagram of another congestion processing method provided in an embodiment of the present disclosure;
FIG. 3 is a flow diagram of yet another congestion processing method provided in an embodiment of the present disclosure;
FIG. 4 is a schematic diagram of a control plane performing downlink end-to-end flow control provided in an embodiment of the present disclosure;
FIG. 5 is a schematic diagram of a control plane performing downlink end-to-end flow control provided in another embodiment of the present disclosure;
FIG. 6 is a schematic diagram of a control plane performing downlink end-to-end flow control provided in yet another embodiment of the present disclosure;
FIG. 7 is a schematic diagram of a control plane performing uplink end-to-end flow control provided in an embodiment of the present disclosure;
FIG. 8 is a schematic diagram showing a structure of a congestion processing apparatus provided in an embodiment of the present disclosure;
FIG. 9 is a schematic diagram showing a structure of another congestion processing apparatus provided by in embodiment of the present disclosure;
FIG. 10 is a schematic diagram showing a structure of yet another congestion processing apparatus provided in an embodiment of the present disclosure; and
FIG. 11 is a schematic diagram showing a structure of a device provided in an embodiment of the present disclosure.

### DETAILED DESCRIPTION

Embodiments of the present disclosure will be described below with reference to the accompanying drawings.

The steps illustrated in a flow diagram of an accompanying drawing may be performed in a computer system that stores, for example, a set of computer-executable instructions. In addition, although a logical order is shown in the flow diagram, in some cases, the steps shown or described may be performed in an order different than the order shown herein.

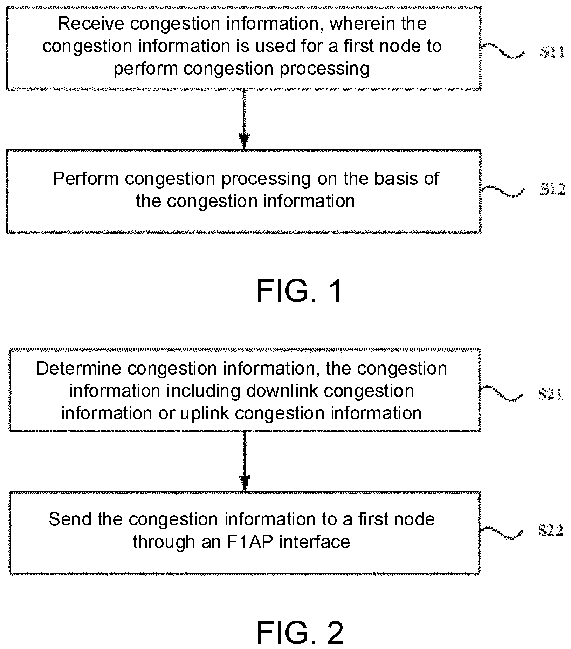

In an embodiment, a congestion processing method is provided. The congestion processing method is mainly applied to a first node. As shown in FIG. 1, the congestion processing method provided in this embodiment mainly includes steps S11 and S12.

In S11, congestion information is received, and the congestion information is used for congestion processing of the first node.

In S12, the congestion processing is performed based on the congestion information.

In this embodiment, the first node is a central unit control plane (CU-CP).

In an exemplary implementation, the congestion information includes one or more of the following:
downlink congestion information, uplink congestion information, and downlink congestion data radio bearer (DRB) information.

In an exemplary implementation, the downlink congestion information includes one or more of the following:
a wireless backhaul radio link control (RLC) channel identifier of a congested link; a routing identifier of the congested link; an integrated access and backhaul (IAB) child node identifier of the congested link; and a downlink data transmission efficiency of the congested link.

In an exemplary implementation, the downlink data transmission efficiency includes one or more of the following:
a ratio of an actual downlink cache to a supportable downlink cache; and a ratio of a data rate of an egress wireless backhaul RLC channel to a data rate of an ingress wireless backhaul RLC channel.

In an exemplary implementation, the uplink congestion information includes one or more of the following:
a wireless backhaul RLC channel identifier of a congested link; a link identifier of the congested link; an IAB child node identifier of the congested link; a buffer status report (BSR) reported by a child node of the congested link; and an uplink data transmission efficiency of the congested link.

In an exemplary implementation, the wireless backhaul RLC channel identifier includes an ingress wireless backhaul RLC channel identifier, or an egress wireless backhaul RLC channel identifier, or the ingress wireless backhaul RLC channel identifier and the egress wireless backhaul RLC channel identifier.

In an exemplary implementation, the IAB child node identifier includes a wireless backhaul adaptation protocol (BAP) address, or an Internet protocol (IP) address, or the wireless BAP address and the IP address.

In an exemplary implementation, the uplink data transmission efficiency includes a ratio of an actual uplink cache to a supportable uplink cache.

In an exemplary implementation, the downlink congestion DRB information includes one or more of the following:
an identifier of a congested DRB; an identifier of a user equipment (UE) to which the congested DRB belongs; an identifier of a tunnel endpoint of a general packet radio service (GPRS) tunnel protocol of the congested DRB; an amount of data required for the congested DRB; and a rate of the data required for the congested DRB.

In an exemplary implementation, receiving link congestion information includes:
receiving the downlink congestion information or the uplink congestion information sent by a second node through an F1 application protocol (FLAP) interface; or receiving the downlink congestion DRB information sent by a third node through an E1 application protocol (E1AP) interface.

The second node refers to an IAB node. The second node may be a node, and a link between the node and a child node is congested. Alternatively, the second node may be a node, and downlink transmission of a backhaul RLC (BH RLC) channel between the node and a child node is congested.

The third node refers to an IAB whose own DRB is congested.

In an embodiment, a congestion processing method is provided. The congestion processing method is mainly applied to the second node. As shown in FIG. 2, the congestion processing method provided in this embodiment mainly includes steps S21 and S22.

In S21, congestion information is determined, and the congestion information includes downlink congestion information or uplink congestion information.

In S22, the congestion information is sent to the first node through an F1AP interface.

In an exemplary implementation, the congestion information includes one or more of the following:

the downlink congestion information, the uplink congestion information, and downlink congestion DRB information.

In an exemplary implementation, the downlink congestion information includes one or more of the following:
a wireless backhaul RLC channel identifier of a congested link; a routing identifier of the congested link; an IAB child node identifier of the congested link; and a downlink data transmission efficiency of the congested link.

In an exemplary implementation, the downlink data transmission efficiency includes one or more of the following:
a ratio of an actual downlink cache to a supportable downlink cache; and a ratio of a data rate of an egress wireless backhaul RLC channel to a data rate of an ingress wireless backhaul RLC channel.

In an exemplary implementation, the uplink congestion information includes one or more of the following:
a wireless backhaul RLC channel identifier of a congested link; a link identifier of the congested link; an IAB child node identifier of the congested link; a BSR reported by a child node of the congested link; and an uplink data transmission efficiency of the congested link.

In an exemplary implementation, the wireless backhaul RLC channel identifier includes an ingress wireless backhaul RLC channel identifier, or an egress wireless backhaul RLC channel identifier, or the ingress wireless backhaul RLC channel identifier and the egress wireless backhaul RLC channel identifier.

In an exemplary implementation, the IAB child node identifier includes a wireless BAP address, or an IP address, or the wireless BAP address and the IP address.

In an exemplary implementation, the uplink data transmission efficiency includes a ratio of an actual uplink cache to a supportable uplink cache.

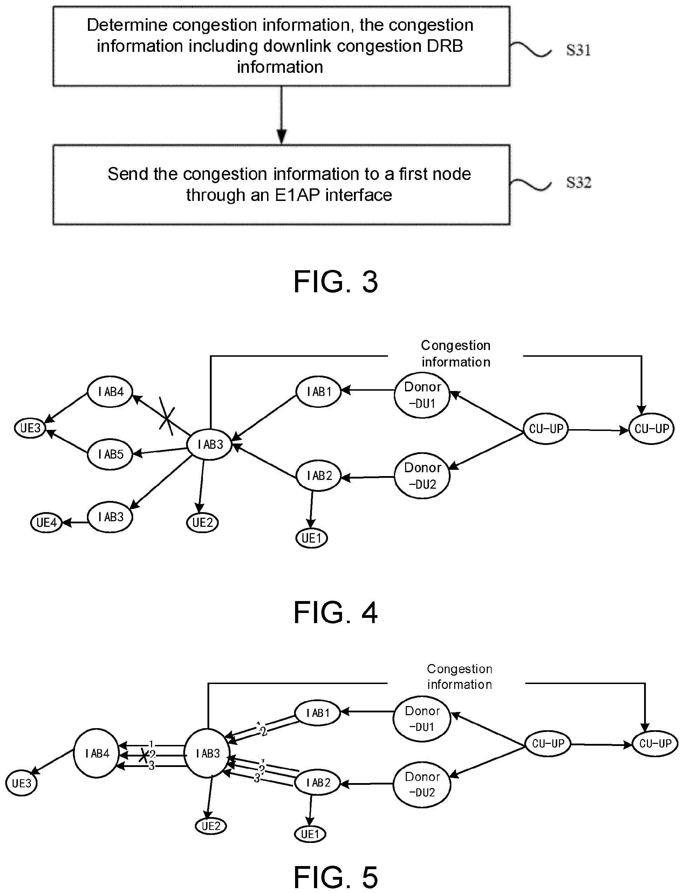

In an embodiment, a congestion processing method is provided. The congestion processing method is mainly applied to the third node. As shown in FIG. 3, the congestion processing method provided in this embodiment mainly includes steps S31 and S32.

In S31, congestion information is determined, and the congestion information includes downlink congestion DRB information.

In S32, the congestion information is sent to the first node through an E1AP interface.

In an exemplary implementation, the downlink congestion DRB information includes one or more of the following:
an identifier of a congested DRB; an identifier of a UE to which the congested DRB belongs; an identifier of a tunnel endpoint of a GPRS tunnel protocol of the congested DRB; an amount of data required for the congested DRB; and a rate of the data required for the congested DRB.

As for a manner in which the first node performs the congestion processing based on the congestion information, a manner of information interaction between the second node and the first node, and a manner of information interaction between the third node and the first node, reference may be made to the description in the following embodiments, and the details will not be described in this embodiment.

In an embodiment, a method for a control plane to perform downlink end-to-end congestion processing is provided. The method will be described by taking FIG. 4 as an example. This embodiment is described by taking an example in which congestion occurs in one link.

In a first step, downlink data arrives at a CU-user plane (CU-UP) from a core network, the CU-UP transmits the downlink data to an IAB3 through IAB nodes, and the IAB3 detects transmission conditions of the downlink data transmitted to child nodes of the IAB3. It is detected that a downlink between the IAB3 and a child node IAB4 of the IAB3 is congested, downlink transmission between the IAB3 and a child node IAB5 of the IAB3 is smooth, and downlink transmission between the IAB3 and a child node IAB6 of the IAB3 is smooth.

In a second step, the IAB3 summarizes the detected downlink congestion information between the IAB3 and the child nodes of the IAB3 and then reports it to the CU-CP through an F1AP message.

The downlink congestion information includes one or more of the following:
a link identifier of a congested link (e.g., a routing identifier (ID) of the congested link); an IAB child node identifier of the congested link; and a downlink data transmission efficiency of the congested link.

The downlink data transmission efficiency includes one or more of the following:
a ratio of an actual downlink cache to a supportable downlink cache; and a ratio of a data rate of an egress wireless backhaul RLC channel to a data rate of an ingress wireless backhaul RLC channel.

The IAB child node identifier includes a wireless BAP address, or an IP address, or the wireless BAP address and the IP address.

In a third step, the CU-CP receives the downlink congestion information sent by the IAB3, and identifies a downlink of the IAB3 that is congested (that is, the link between the IAB3 and the IAB4) from the congestion information. In addition, the CU-CP is also informed that the downlink transmission between the IAB3 and the child node IAB5 of the IAB3 is smooth, and the downlink transmission between the IAB3 and the child node IAB6 of the IAB3 is smooth.

In a fourth step, in combination with an overall network topology, the CU-CP selects to re-map downlink data at the IAB3, which should be transmitted by an original path (IAB3->IAB4) link, to a new path (IAB3->IAB5) link for transmission.

The CU-CP sends a new [BAP MAPPING CONFIGURATION] F1 message to an IAB-Donor distributed unit (DU), and reconfigures a routing ID of the downlink data that should be transmitted to the original path (IAB3->IAB4) link. That is, the CU-CP modifies a corresponding relationship between an IP header and a BAP routing ID, so that the data is finally transmitted by the new path (IAB3->IAB5) link.

In addition, the CU-CP sends the new [BAP MAPPING CONFIGURATION] F1 message to the IAB3, and reconfigures mapping at the IAB3, so that an egress BH RLC channel corresponding to an ingress BH RLC channel of the downlink data at the IAB3 that should be transmitted by the original path (IAB3->IAB4) link is a BH RLC channel on the new path (IAB3->IAB5) link.

In a fifth step, the IAB-Donor DU receives new routing configuration information, updates routing configuration information, and replies to the CU-CP with an acknowledgement message; and then transmits an IP packet to a new routing path for transmission.

In a sixth step, the IAB3 receives new traffic mapping configuration information, updates traffic mapping configuration information, and replies to the CU-CP with an acknowledgement message; and then transmits a newly received downlink data that should be transmitted by the original path (IAB3->IAB4) link to the newly configured egress BH RLC channel on the new path (IAB3->IAB5) link.

In an embodiment, a method for a control plane to perform downlink end-to-end congestion processing is provided. The method will be described by taking FIG. 5 as an example. This embodiment is described by taking an example in which a BH RLC channel is congested.

In a first step, downlink data arrives at a CU-UP from a core network, the CU-UP transmits the downlink data to an IAB3 through IAB nodes, and the IAB3 transmits the downlink data to a UE3 through an IAB4. The IAB detects transmission conditions of the downlink data transmitted to the IAB4 through BH RLC channels. It is detected that a downlink transmission of a BH RLC channel 2 between the IAB3 and the child node IAB4 of the IAB3 is congested.

In a second step, the IAB3 summarizes the detected downlink congestion information of the BH RLC channel 2, and then reports it to the CU-CP through an F1AP message.

The downlink congestion information includes one or more of the following:
a wireless backhaul RLC channel identifier of a congested link; a routing identifier of the congested link; an IAB child node identifier of the congested link; and a downlink data transmission efficiency of the congested link.

The downlink data transmission efficiency includes one or more of the following:
a ratio of an actual downlink cache to a supportable downlink cache; and a ratio of a data rate of an egress wireless backhaul RLC channel to a data rate of an ingress wireless backhaul RLC channel.

The wireless backhaul RLC channel identifier includes an ingress wireless backhaul RLC channel identifier, or an egress wireless backhaul RLC channel identifier, or the ingress wireless backhaul RLC channel identifier and the egress wireless backhaul RLC channel identifier.

The IAB child node identifier includes a wireless BAP address, or an IP address, or the wireless BAP address and the IP address.

In a third step, the CU-CP receives the downlink congestion information sent by the IAB3, and identifies that the IAB3 has the egress BH RLC channel 2 of downlink congestion from the congestion information.

In a fourth step, in combination with an overall network topology, the CU-CP selects to re-map downlink data at the IAB3, which should be transmitted by the egress BH RLC channel 2 of an original path, to an egress BH RLC channel 1 or an egress BH RLC channel 3 for transmission. The CU-CP sends a new [BAP MAPPING CONFIGURATION] F1 message to the IAB3, and reconfigures mapping at the IAB3, so that an egress BH RLC channel corresponding to an ingress BH RLC channel of the downlink data at the IAB3 that should be transmitted by the egress BH RLC channel 2 of the original path is the egress BH RLC channel 1 or the egress BH RLC channel 3.

In a fifth step, the IAB3 receives new traffic mapping configuration information, updates traffic mapping configuration information, and replies to the CU-CP with an acknowledgement message; and then transmits a newly received downlink data that should be transmitted by the egress BH RLC channel 2 of the original path to the egress BH RLC channel 1 or the egress BH RLC channel 3 of a new path.

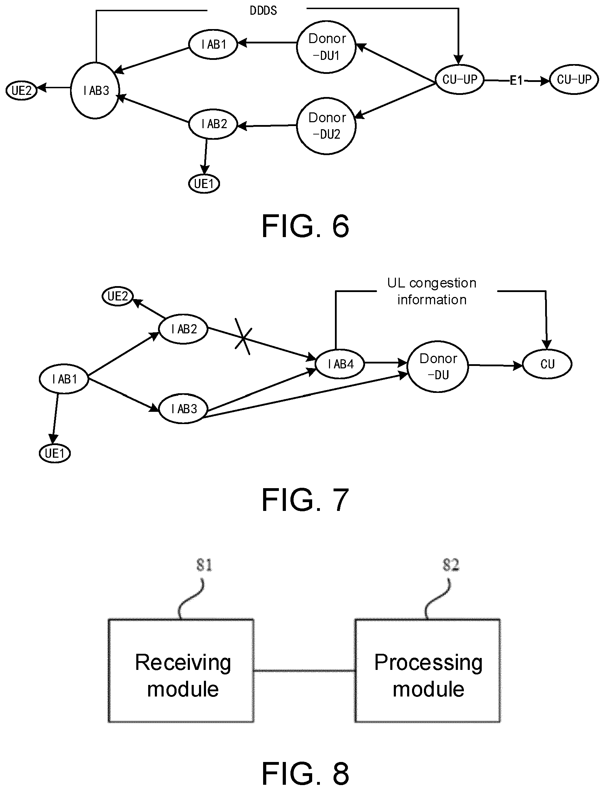

In an embodiment, a method for a control plane to perform downlink end-to-end congestion processing is provided. The method will be described by taking FIG. 6 as an example.

In a first step, downlink data arrives at a CU-UP from a core network, the CU-UP transmits the downlink data to an IAB3 through IAB nodes, and the IAB3 sends the downlink data to a UE.

In a second step, the IAB3 feeds back downlink data delivery status (ODDS) information to the CU-UP. The ODDS information includes an amount of data required for DRBs of the UE, a rate of the data required for the DRBs of the UE, serial number (SN) information of a data packet successfully transmitted by an air interface, etc.

In a third step, the CU-UP receives the DDDS information sent by the IAB3, determines which of the DRBs of the UE2 accessing the IAB3 are congested, and summarizes the determined result as downlink transmission congestion indication information.

The downlink congestion DRB information includes one or more of the following:
an identifier of a congested DRB; an identifier of a UE to which the congested DRB belongs; an identifier of a tunnel endpoint of a GPRS tunnel protocol of the congested DRB; an amount of data required for the congested DRB; and a rate of the data required for the congested DRB.

In a fourth step, the CU-UP sends the downlink transmission congestion indication information to the CU-CP through an E1AP message.

In a fifth step, the CU-CP receives the downlink transmission congestion indication information sent by the CU-UP and replies to the CU-UP with an acknowledgement response. In combination with an overall network topology, the CU-CP re-plans a new downlink transmission path for the congested DRB in an IAB network. It may be considered to modify a mapping relationship of quality of service flow (QoS flow) at a CP-UP to the DRB. That is, data on an original downlink congested DRB is transmitted through other DRB(s). Alternatively, a routing ID of an IP packet at the Donor DU may be modified. That is, an original downlink congested packet is transmitted by other routing path(s). After the CU-CP re-plans the path, an updated mapping relationship of the QoS flow to the DRB is sent to the CU-UP through an E1AP, or an updated routing table is sent to the IAB-Donor DU node through an F1AP.

In a sixth step, the CU-UP receives the updated mapping relationship of the QoS flow to the DRB, updates the mapping relationship, and replies to the CU-CP with an acknowledgement message; then, the CU-UP transmits a packet of QoS flow onto the other DRB. Alternatively, the IAB-Donor DU receives new route configuration information, updates routing configuration information, and replies to the CU-CP with an acknowledgement message; then, the IAB-Donor DU transmits the IP packet to the new routing path.

In an embodiment, a method for a control plane to perform uplink end-to-end congestion processing is provided. The method will be described by taking FIG. 7 as an example.

In a first step, uplink data arrives at an access node IAB1 from a UE1, then is transmitted to an IAB4 and a Donor DU through an IAB2/IAB3, and finally arrives at a CU-UP and continues to be transmitted to a core network. The IAB4 applies for BSR determination on an amount of uplink data transmitted to child nodes thereof, and performs uplink resource allocation on the IAB child nodes in combination with currently available uplink resources. The uplink between the IAB2 and the IAB4 is congested when an amount of uplink data at the IAB2 is large and the IAB4 has insufficient uplink resources for allocation.

In a second step, the IAB4 detects that the uplink between the IAB2 and the IAB4 is congested; the IAB4 summarizes uplink congestion information, and then reports it to the CU-CP through an F1AP message.

The uplink congestion information includes one or more of the following:
a wireless backhaul RLC channel identifier of a congested link; a link identifier of the congested link (e.g., a routing ID of the congested link); an IAB child node identifier of the congested link; a BSR reported by a child node of the congested link; and an uplink data transmission efficiency of the congested link.

The wireless backhaul RLC channel identifier includes an ingress wireless backhaul RLC channel identifier, or an egress wireless backhaul RLC channel identifier, or the ingress wireless backhaul RLC channel identifier and the egress wireless backhaul RLC channel identifier.

The IAB child node identifier includes a wireless BAP address, or an IP address, or the wireless BAP address and the IP address.

The uplink data transmission efficiency includes a ratio of an actual uplink cache to a supportable uplink cache.

In a third step, the CU-CP receives the uplink congestion information sent by the IAB4, and identifies an uplink of the IAB4 that is congested (that is, the link between the IAB2 and the IAB4) from the congestion information. In addition, the CU-CP is also informed that uplink transmission between the IAB4 and a child node IAB3 of the IAB4 is smooth.

In a fourth step, in combination with an overall network topology, the CU-CP selects to re-map uplink data at the IAB1, which should be transmitted by an original path (IAB1->IAB2) link, to a new path (IAB1->IAB3) link for transmission. Data of the UE1 arrives at the IAB Donor-DU through the IAB3 and then is transmitted to the CU-UP, thereby achieving the effect of relieving link congestion between the IAB2 and the IAB4. The CU-CP sends a new F1 message to the IAB1, modifies a routing ID of a packet transmitted from the UE1 to the IAB1 and configures a new mapping table for the IAB1, so that an egress BH RLC channel corresponding to uplink data at the IAB1 that should be transmitted by the original path (IAB1->IAB2) link is a BH RLC channel on the new path (IAB1->IAB3) link.

In a fifth step, the IAB1 receives new routing configuration information and new mapping configuration table, updates routing configuration information and mapping configuration table, and replies to the CU-CP with an acknowledgement message; and then transmits an uplink packet of the UE1 to a new routing path for transmission.

In an embodiment, a congestion processing apparatus is provided, and the congestion processing apparatus is mainly applied to the first node. As shown in FIG. 8, the congestion processing apparatus provided in this embodiment mainly includes a receiving module 81 and a processing module 82.

The receiving module 81 is configured to receive congestion information, and the congestion information is used for congestion processing of the first node. The processing module 82 is configured to perform the congestion processing based on the congestion information.

In an exemplary implementation, the congestion information includes one or more of the following:
downlink congestion information, uplink congestion information, and downlink congestion DRB information.

In an exemplary implementation, the downlink congestion information includes one or more of the following:
a wireless backhaul RLC channel identifier of a congested link; a routing identifier of the congested link; an IAB child node identifier of the congested link; and a downlink data transmission efficiency of the congested link.

In an exemplary implementation, the downlink data transmission efficiency includes one or more of the following:
a ratio of an actual downlink cache to a supportable downlink cache; and a ratio of a data rate of an egress wireless backhaul RLC channel to a data rate of an ingress wireless backhaul RLC channel.

In an exemplary implementation, the uplink congestion information includes one or more of the following:
a wireless backhaul RLC channel identifier of a congested link; a link identifier of the congested link; an IAB child node identifier of the congested link; a BSR reported by a child node of the congested link; and an uplink data transmission efficiency of the congested link.

In an exemplary implementation, the wireless backhaul RLC channel identifier includes an ingress wireless backhaul RLC channel identifier, or an egress wireless backhaul RLC channel identifier, or the ingress wireless backhaul RLC channel identifier and the egress wireless backhaul RLC channel identifier.

In an exemplary implementation, the IAB child node identifier includes a wireless BAP address, or an IP address, or the wireless BAP address and the IP address.

In an exemplary implementation, the uplink data transmission efficiency includes a ratio of an actual uplink cache to a supportable uplink cache.

In an exemplary implementation, the downlink congestion DRB information includes one or more of the following:
an identifier of a congested DRB; an identifier of a UE to which the congested DRB belongs; an identifier of a tunnel endpoint of a GPRS tunnel protocol of the congested DRB; an amount of data required for the congested DRB; and a rate of the data required for the congested DRB.

In an exemplary implementation, receiving the link congestion information includes:
receiving the downlink congestion information or the uplink congestion information sent by the second node through an F1AP interface; or receiving the downlink congestion DRB information sent by the third node through an E1AP interface.

The congestion processing apparatus provided in this embodiment may execute the congestion processing method provided in any embodiment of the present disclosure, and has corresponding functional modules and effects for executing the method. For technical details that are not described in detail in this embodiment, reference may be made to the congestion processing method provided in any embodiment of the present disclosure.

In the embodiment of the congestion processing apparatus, various units and modules included therein are merely classified according to functional logic, but are not limited to the above classification, as long as corresponding functions can be implemented; in addition, names of various functional modules are merely for the convenience of distinguishing from each other, and are not intended to limit the protection scope of the present disclosure.

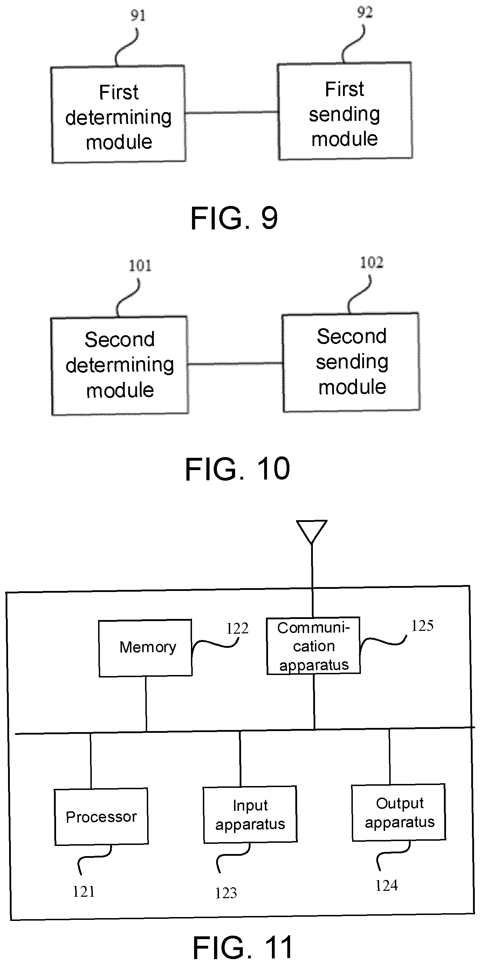

In an embodiment, a congestion processing apparatus is provided, and the congestion processing apparatus is mainly applied to the second node. As shown in FIG. 9, the congestion processing apparatus provided in this embodiment mainly includes a first determining module 91 and a first sending module 92.

The first determining module 91 is configured to determine congestion information, and the congestion information includes downlink congestion information or uplink congestion information. The first sending module 92 is configured to send the congestion information to the first node through an F1AP interface.

In an exemplary implementation, the congestion information includes one or more of the following:
the downlink congestion information, the uplink congestion information, and downlink congestion DRB information.

In an exemplary implementation, the downlink congestion information includes one or more of the following:
a wireless backhaul RLC channel identifier of a congested link; a routing identifier of the congested link; an IAB child node identifier of the congested link; and a downlink data transmission efficiency of the congested link.

In an exemplary implementation, the downlink data transmission efficiency includes one or more of the following:
a ratio of an actual downlink cache to a supportable downlink cache; and a ratio of a data rate of an egress wireless backhaul RLC channel to a data rate of an ingress wireless backhaul RLC channel.

In an exemplary implementation, the uplink congestion information includes one or more of the following:
a wireless backhaul RLC channel identifier of a congested link; a link identifier of the congested link; an IAB child node identifier of the congested link; a BSR reported by a child node of the congested link; and an uplink data transmission efficiency of the congested link.

In an exemplary implementation, the wireless backhaul RLC channel identifier includes an ingress wireless backhaul RLC channel identifier, or an egress wireless backhaul RLC channel identifier, or the ingress wireless backhaul RLC channel identifier and the egress wireless backhaul RLC channel identifier.

In an exemplary implementation, the IAB child node identifier includes a wireless BAP address, or an IP address, or the wireless BAP address and the IP address.

In an exemplary implementation, the uplink data transmission efficiency includes a ratio of an actual uplink cache to a supportable uplink cache.

The congestion processing apparatus provided in this embodiment may execute the congestion processing method provided in any embodiment of the present disclosure, and has corresponding functional modules and effects for executing the method. For technical details that are not described in detail in this embodiment, reference may be made to the congestion processing method provided in any embodiment of the present disclosure.

In the embodiment of the above congestion processing apparatus, various units and modules included therein are merely classified according to functional logic, but are not limited to the above classification, as long as corresponding functions can be implemented; in addition, names of various functional modules are merely for the convenience of distinguishing from each other, and are not intended to limit the protection scope of the present disclosure.

In an embodiment, a congestion processing apparatus is provided, and the congestion processing apparatus is mainly applied to the third node. As shown in FIG. 10, the congestion processing apparatus provided in this embodiment mainly includes a second determining module 101 and a second sending module 102.

The second determining module 101 is configured to determine congestion information, and the congestion information includes downlink congestion DRB information. The second sending module 102 is configured to send the congestion information to the first node through an E1AP interface.

In an exemplary implementation, the downlink congestion DRB information includes one or more of the following:
an identifier of a congested DRB; an identifier of a UE to which the congested DRB belongs; an identifier of a tunnel endpoint of a GPRS tunnel protocol of the congested DRB; an amount of data required for the congested DRB; and a rate of the data required for the congested DRB.

The congestion processing apparatus provided in this embodiment may execute the congestion processing method provided in any embodiment of the present disclosure, and has corresponding functional modules and effects for executing the method. For technical details that are not described in detail in this embodiment, reference may be made to the congestion processing method provided in any embodiment of the present disclosure.

In the embodiment of the above congestion processing apparatus, various units and modules included therein are merely classified according to functional logic, but are not limited to the above classification, as long as corresponding functions can be implemented; in addition, names of various functional modules are merely for the convenience of distinguishing from each other, and are not intended to limit the protection scope of the present disclosure.

An embodiment of the present disclosure provides a device. FIG. 11 is a schematic diagram showing a structure of the device provided in the embodiment of the present disclosure. As shown in FIG. 11, the device includes a processor 111, a memory 112, an input apparatus 113, an output apparatus 114 and a communication apparatus 115. The number of processors 111 in the device may be one or more, and one processor 111 is taken as an example in FIG. 11. The processor 111, the memory 112, the input apparatus 113 and the output apparatus 114 in the device may be connected via a bus or in other ways, and the connection via the bus is taken as an example in FIG. 11.

The memory 112, which serves as a computer-readable storage medium, may be used to store a software program, a computer-executable program and modules. The processor 111 executes the software program, instructions and the modules that are stored in the memory 112, so as to execute various functional applications and data processing of the device, i.e., implement any one of the methods provided in the embodiments of the present disclosure.

The memory 112 may mainly include a program storage area and a data storage area. The program storage area may store an operating system, and an application program required for at least one function. The storage data area may store data created according to use of the device. In addition, the memory 112 may include a high-speed random access memory; alternatively, the memory 112 may include a non-volatile memory, such as at least one magnetic disk storage device, a flash memory device, or other non-volatile solid state storage devices. In some examples, the memory 112 may include memories that are provided remotely relative to the processor 111, and these remote memories may be connected to the device through a network. Instances of the network include, but are not limited to, the Internet, intranet, local area network, mobile communication network, and their combinations.

The input apparatus 113 may be used to receive input digital or character information and generate key signal inputs related to user settings and function controls of the device. The output apparatus 114 may include a display device such as a display screen.

The communication apparatus 115 may include a receiver and a transmitter. The communication apparatus 115 is configured to receive and transmit information according to the control of the processor 111.

In a case where the device is the first node, the processor 111 executes the programs stored in the system memory 112, so as to execute various functional applications and data processing, e.g., implement the congestion processing method provided in the embodiments of the present disclosure. The method includes:
receiving the congestion information, the congestion information being used for congestion processing of the first node; and performing the congestion processing based on the congestion information.

The processor 111 may also implement a technical solution of the congestion processing method provided in any embodiment of the present disclosure. The hardware structure and functions of the device can be explained with reference to the contents of this embodiment.

In a case where the device is the second node, the processor 111 executes the programs stored in the system memory 112, so as to execute various functional applications and data processing, e.g., implement the congestion processing method provided in the embodiments of the present disclosure. The method includes:
determining the congestion information, the congestion information including downlink congestion information or uplink congestion information; and sending the congestion information to the first node through the F1AP interface.

The processor 111 may also implement a technical solution of the congestion processing method provided in any embodiment of the present disclosure. The hardware structure and functions of the device can be explained with reference to the contents of this embodiment.

In a case where the device is the third node, the processor 111 executes the programs stored in the system memory 112, so as to execute various functional applications and data processing, e.g., implement the congestion processing method provided in the embodiments of the present disclosure. The method includes:
determining the congestion information, the congestion information including downlink congestion DRB information; and sending the congestion information to the first node through the E1AP interface.

The processor 111 may also implement a technical solution of the congestion processing method provided in any embodiment of the present disclosure. The hardware structure and functions of the device can be explained with reference to the contents of this embodiment.

In an exemplary implementation, an embodiment of the present disclosure provides a storage medium including computer executable instructions. When executed by a computer processor, the computer executable instructions are used for executing a congestion processing method. The method is applied to the first node, and includes:
receiving congestion information, the congestion information being used for congestion processing of the first node; and performing the congestion processing based on the congestion information.

In the storage medium including the computer executable instructions provided in the embodiment of the present disclosure, the computer executable instructions are not limited to the operations of the method described above, but may also perform the operations involved in the congestion processing method provided in any embodiment of the present disclosure.

In an exemplary implementation, an embodiment of the present disclosure provides a storage medium including computer executable instructions. When executed by a computer processor, the computer executable instructions are used for executing a congestion processing method. The method is applied to the second node, and includes:
determining congestion information, the congestion information including downlink congestion information or uplink congestion information; and sending the congestion information to the first node through an F1AP interface.

In the storage medium including the computer executable instructions provided in the embodiment of the present disclosure, the computer executable instructions are not limited to the operations of the method described above, but may also perform the operations involved in the congestion processing method provided in any embodiment of the present disclosure.

In an exemplary implementation, an embodiment of the present disclosure provides a storage medium including computer executable instructions. When executed by a computer processor, the computer executable instructions are used for executing a congestion processing method. The method is applied to the third node, and includes:
determining congestion information, the congestion information including downlink congestion DRB information; and sending the congestion information to the first node through an E1AP interface.

In the storage medium including the computer executable instructions provided in the embodiment of the present disclosure, the computer executable instructions are not limited to the operations of the method described above, but may also perform the operations involved in the congestion processing method provided in any embodiment of the present disclosure.

From the above description of the implementations, the present disclosure may be implemented by means of both software and necessary general-purpose hardware, or may be implemented by means of hardware. The technical solutions of the present disclosure may be essentially embodied in the form of a software product, and the computer software product may be stored in a computer-readable storage medium, such as a floppy disk, a read-only memory (ROM), a random access memory (RAM), a flash, a hard disk, or an optical disk of a computer, and includes a plurality of instructions for enabling a computer device (which may be a personal computer, a server, a network device, etc.) to execute the method as described in the embodiments of the present disclosure.

The term UE covers any suitable type of wireless UE, such as a mobile phone, a portable data processing device, a portable web browser or a vehicle mounted mobile station.

In general, various embodiments of the present disclosure may be implemented in hardware or special purpose circuits, software, logic or any combination thereof. For example, in some aspects, the embodiments may be implemented in hardware, while in other aspects, the embodiments may be implemented in hardware or software which may be executed by a controller, a microprocessor or other computing device, although the present disclosure is not limited thereto.

The embodiments of the present disclosure may be implemented by a data processor of a mobile apparatus executing computer program instructions, e.g., in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object code written in one programming language or any combination of a plurality of programming languages.

The block diagrams of any logic flow in the figures of the present disclosure may represent program steps, or may represent interconnected logic circuits, modules and functions, or may represent a combination of program steps and logic circuits, modules and functions. The computer program may be stored in a memory. The memory may be of any type suitable to the local technical environment and may be implemented by using any suitable data storage technology, such as, but not limited to, a read only memory (ROM), a random access memory (RAM), an optical storage apparatus and system (e.g., a digital video disc (DVD) or a compact disc (CD)), etc. The computer readable medium may include a non-transitory storage medium. The data processor may be of any type suitable to the local technical environment, such as, but not limited to, a general purpose computer, a special purpose computer, a microprocessor, a digital signal processor (DSP), an application specific integrated circuit (ASIC), a field-programmable gate array (FPGA), and a processor based on a multi-core processor architecture.

## Claims

1. A congestion processing method applied to a first node, the method comprising:
receiving congestion information, wherein the congestion information is used for congestion processing of the first node; and
performing the congestion processing based on the congestion information.

2. The method according to claim 1, wherein the congestion information includes at least one of:
downlink congestion information, uplink congestion information, or downlink congestion data radio bearer, DRB, information.

3. The method according to claim 2, wherein the downlink congestion information includes at least one of:
a wireless backhaul radio link control, RLC, channel identifier of a congested link;
a routing identifier of the congested link;
an integrated access and backhaul, IAB, child node identifier of the congested link; or
a downlink data transmission efficiency of the congested link.

4. The method according to claim 3, wherein the downlink data transmission efficiency includes at least one of:
a ratio of an actual downlink cache to a supportable downlink cache; or
a ratio of a data rate of an egress wireless backhaul RLC channel to a data rate of an ingress wireless backhaul RLC channel.

5. The method according to claim 2, wherein the uplink congestion information includes at least one of:
a wireless backhaul RLC channel identifier of a congested link;
a link identifier of the congested link;
an IAB child node identifier of the congested link;
a buffer status report, BSR, reported by a child node of the congested link; or
an uplink data transmission efficiency of the congested link.

6. The method according to claim 3 or 5, wherein the wireless backhaul RLC channel identifier includes at least one of an ingress wireless backhaul RLC channel identifier and an egress wireless backhaul RLC channel identifier.

7. The method according to claim 3 or 5, wherein the IAB child node identifier includes at least one of a wireless backhaul adaptation protocol, BAP, address and an Internet protocol, IP, address.

8. The method according to claim 5, wherein the uplink data transmission efficiency includes:
a ratio of an actual uplink cache to a supportable uplink cache.

9. The method according to claim 2, wherein the downlink congestion DRB information includes at least one of:
an identifier of a congested DRB;
an identifier of a user equipment, UE, to which the congested DRB belongs;
an identifier of a tunnel endpoint of a general packet radio service, GPRS, tunnel protocol of the congested DRB;
an amount of data required for the congested DRB; or
a rate of the data required for the congested DRB.

10. The method according to claim 1, wherein receiving the congestion information includes:
receiving downlink congestion information or uplink congestion information sent by a second node through an F1 application protocol, FLAP, interface; or
receiving downlink congestion DRB information sent by a third node through an E1 application protocol, E1AP, interface.

11. A congestion processing method applied to a second node, the method comprising:
determining congestion information, wherein the congestion information includes downlink congestion information or uplink congestion information; and
sending the congestion information to a first node through an F1AP interface.

12. A congestion processing method applied to a third node, the method comprising:
determining congestion information, wherein the congestion information includes downlink congestion DRB information; and
sending the congestion information to a first node through an ELAP interface.

13. A congestion processing apparatus configured at a first node, the apparatus comprising:
a receiving module configured to receive congestion information, wherein the congestion information is used for congestion processing of the first node; and
a processing module configured to perform the congestion processing based on the congestion information.

14. A congestion processing apparatus configured at a second node, the apparatus comprising:
a first determining module configured to determine congestion information, wherein the congestion information includes downlink congestion information or uplink congestion information; and
a first sending module configured to send the congestion information to a first node through an F1AP interface.

15. A congestion processing apparatus configured at a third node, the apparatus comprising:
a second determining module configured to determine congestion information, wherein the congestion information includes downlink congestion DRB information; and
a second sending module configured to send the congestion information to a first node through an E1AP interface.

16. A device, comprising:
at least one processor;
a memory configured to store at least one program, wherein
the at least one program, when executed by the at least one processor, causes the at least one processor to implement the congestion processing method according to any one of claims 1 to 12.

17. A storage medium having stored a computer program, wherein when executed by a processor, the computer program implements the congestion processing method according to any one of claims 1 to 12.
